# EUROPÄISCHE PATENTSCHRIFT

(11) **EP 2 621 402 B1**
(45) Veröffentlichungstag und Bekanntmachung des Hinweises auf die Patenterteilung: **21.01.2026**
(21) Anmeldenummer: 11773387.3
(22) Anmeldetag: 30.09.2011
(51) Int. Cl.: A61C 5/62, B29C 35/08, F21V 9/20, G02B 25/02, A61C 13/15, B29C 73/02, B29C 31/04

(54) **VORRICHTUNG ZUM AUSHÄRTEN VON LICHTAUSHÄRTBAREN MATERIALIEN, VERFAHREN UND SET**
DEVICE FOR CURING LIGHT-CURABLE MATERIALS, METHOD AND SET
DISPOSITIF POUR LE DURCISSEMENT DE MATÉRIAUX PHOTODURCISSABLES, PROCÉDÉ ET ENSEMBLE

(30) Priorität: 09.05.2011 DE 102011050223; 08.11.2010 DE 102010060422; 30.09.2010 DE 102010046993
(43) Veröffentlichungstag der Anmeldung: 07.08.2013
(73) Patentinhaber: Viering, Anke, 85276 Pfaffenhofen/Ilm (DE); Jurcevic, Dinko, 50968 Köln (DE)
(72) Erfinder: VIERING, Anke, 81737 München (DE); JURCEVIC, Dinko, 50968 Köln (DE); OFFERMANN, Thomas, verstorben (DE)
(86) Internationale Anmeldenummer: PCT/EP2011/004888
(87) Internationale Veröffentlichungsnummer: WO 2012/041510

(56) Entgegenhaltungen:
- EP-A1- 0 658 437
- EP-A1- 2 199 067
- EP-A1- 2 199 067
- WO-A1-2009/136861
- WO-A1-2009/136861
- WO-A1-97/14912
- WO-A1-99/22668
- WO-A1-99/23968
- DE-A1- 3 731 321
- US-A1- 2003 214 060
- US-A1- 2003 214 060
- US-A1- 2004 021 255
- US-A1- 2009 267 269
- US-A1- 2009 267 269

## Beschreibung

Die vorliegende Erfindung bezieht sich auf eine Vorrichtung gemäß Anspruch 1 und ein Verfahren gemäß Anspruch 5.

Aus der Praxis des Zahnmediziners sind lichtaushärtende bzw. lichtaushärtbare Acrylklebstoffe zur Anwendung im Mundraum bekannt. Diese Klebstoffe dienen vor allem zum Herstellen von Provisorien. Nach ihrem Aufbringen werden sie durch Einstrahlung von UV-Licht aus UV-Lampen ausgehärtet.

Eine Aufgabe der vorliegenden Erfindung ist es, eine weitere Lichteinrichtung und entsprechende Verfahren und ein Set vorzuschlagen.

Diese Aufgabe wird durch eine Vorrichtung mit den Merkmalen des Anspruchs 1 gelöst.

Bei allen folgenden Ausführungen ist der Gebrauch des Ausdrucks "kann sein" bzw. "kann haben" usw. synonym zu "ist vorzugsweise" bzw. "hat vorzugsweise" usw. zu verstehen.

Nicht erfindungsgemäß wird eine Blitzlichtvorrichtung vorgeschlagen, welche wenigstens eine Einrichtung zum Erzeugen von Blitzlicht und wenigstens eine Einrichtung zum Fokussieren des erzeugten Blitzlichtes aufweist.

Vorteilhafte Weiterentwicklungen der vorliegenden Erfindung sind jeweils Gegenstand von Unteransprüchen, der folgenden Beschreibung sowie der Ausführungsbeispiele.

Unter einer Blitzlichtvorrichtung wird in manchen nicht erfindungsgemäßen Ausführungsformen eine Gasentladungsvorrichtung zum Erzeugen von Licht verstanden. Die Blitzlichtvorrichtung ist in manchen nicht erfindungsgemäßen Ausführungsformen mit einem Kondensator ausgestaltet, welcher mittels einer Batterie oder eines Akkumulators gespeist wird. Die Blitzlichtvorrichtung ist in manchen nicht erfindungsgemäßen
Ausführungsformen als Xenon-Entladungsvorrichtung oder als Entladungsvorrichtung mit einem anderen Edelgas ausgestaltet. Das emittierte Wellenspektrum kann jenes der Xenon-Lampe sein.

Die Batterie oder der Akkumulator kann ausgestaltet sein, um mittels Induktion vom Benutzer erneut geladen zu werden.

Unter einem lichtaushärtbaren oder lichtaushärtenden (diese Begriffe werden im Folgenden synonym zueinander verwendet) Material wird in manchen erfindungsgemäßen Ausführungsformen ein Material, z.B. ein Klebstoff, verstanden, dessen Viskosität gewollt erst unter Einstrahlung von Licht erhöht wird im Sinne eines Aushärtens. Dabei ist die Viskositätserhöhung stark ausgeprägt. Die Viskositätserhöhung kann zu einem Übergang von flüssig oder zähflüssig zu fest oder schneidbar führen. Das lichtaushärtbare Material kann ein Material auf Acryl-Basis bzw. mit Acryl-Bestandteilen oder ein Acryl-Kleber sein. Beispiele eines möglichen, geeigneten lichtaushärtenden Material sind "Vitralit 9180 VL" und "Vitralit 9188 VL" der Firma Panacol-Elosol GmbH aus Steinbach, Deutschland. In manchen erfindungsgemäßen Ausführungsformen wird unter einem lichtaushärtbaren Material ein fotoinduzierbares Material verstanden.

Unter einem Fokussieren von Licht wird in manchen nicht erfindungsgemäßen
Ausführungsformen ein Bündeln oder Konzentrieren der austretenden Lichtenergie oder wesentlicher Anteile hiervon verstanden. Das Bündeln oder Konzentrieren kann derart sein, dass die aus der Blitzlichtvorrichtung austretende oder die durch sie erzeugte Lichtenergie oder Lichtquanten gezielt auf einen Punkt oder eine Fläche gerichtet sind. Die Fläche kann eine Größe von 3 mal 3 cm, 2 mal 2 cm, 1 mal 1 cm, 5 mal 5 mm, Zwischenbereiche und Kombinationen der hier angegebenen Zahlenwerte und Bereichsangaben haben.

In manchen Ausführungsformen der Blitzlichtvorrichtung weist die Einrichtung zum Fokussieren einen Lichtleiter oder einen Lichtwellenleiter auf oder ist als solcher ausgestaltet. Der Lichtleiter kann aus einem transparenten, lichtdurchlässigen Material wie Glas oder Kunststoff ausgestaltet sein oder ein solches Material aufweisen. Der Lichtleiter kann ein Lichtwellenleiter sein.

Ein Lichtleiter ist in manchen nicht erfindungsgemäßen Ausführungsformen eine Einzahl, Vielzahl oder Mehrzahl von Glasfasern, polymeren optischen Fasern oder anderen lichtleitenden Bauteilen, z.B. aus Kunststoff oder Faseroptikkomponenten oder weist solche auf.

Der Lichtleiter kann als eine Gradientenindexfaser oder eine Stufenindexfaser oder jeweils eine Mehrzahl hiervon ausgestaltet sein.

Der Lichtleiter kann gekröpft oder gerade sein. Der Lichtleiter kann eine Ummantelung zum Verhindern eines Lichtaustritts an anderer Stelle als der gewünschten aufweisen.

Das Gehäuse der Blitzlichtvorrichtung kann in einem Hauptabschnitt hiervon, insbesondere also ohne Berücksichtigung des Lichtleiters, die Form eines Laserpointers oder einer Stabtaschenlampe haben.

In manchen nicht erfindungsgemäßen Ausführungsformen weist die erfindungsgemäße Blitzlichtvorrichtung eine Schutzeinrichtung aus. Diese ist vorgesehen und ausgestaltet, um einen Schutz der Augen des Benutzers der Blitzlichteinrichtung vor Eintreten durch Blitzlicht zu gewähren, jedenfalls das entsprechende Risiko zu vermindern. Auf diese Weise kann zumindest ein unangenehmes Blenden des Benutzers durch das Aushärten mittels Licht verhindert oder verringert werden. In einigen erfindungsgemäßen Ausführungsformen ist die Schutzeinrichtung am Lichtleiter befestigt. Dies mag vorteilhaft dazu beitragen, dass die Schutzeinrichtung beim Auswechseln des Lichtleiters gegen einen anderen Lichtleiter ebenfalls mit ausgetauscht wird. So ist es einfach, ohne zusätzlichen Aufwand vorteilhaft sowohl Lichtleiter als auch Schutzeinrichtung gemeinsam auszutauschen.

Sind verschiedene Lichtleiter vorgesehen, wie dies in manchen Ausführungsformen der Blitzlichtvorrichtung der Fall ist, so kann der Benutzer vorteilhaft über jeweils einen für den konkreten Anwendungszweck geeigneteren Lichtleiter verfügen.

In manchen nicht erfindungsgemäßen Ausführungsformen weist der Lichtleiter der Blitzlichtvorrichtung wenigstens einen flexiblen Abschnitt auf. Damit können verschiedene Abstrahlrichtungen des erzeugten Lichts oder Blitzlicht eingestellt oder erzielt werden.

Hierzu kann es von besonderem Vorteil sein, wenn der Lichtleiter der Blitzlichtvorrichtung derart flexibel ist, dass er mit der Hand verformt werden kann, zugleich aber derart steif ist, dass er nach seinem Verformen in dieser Verformung verbleibt. Dies soll zumindest für einen Bereich möglicher Verformungen gelten. Es ist erfindungsgemäß nicht erforderlich, dass der Lichtleiter seine Form nach jeder erdenklichen Verformung beibehalten kann.

Die Blitzlichtvorrichtung weist in manchen Ausführungsformen die Gestalt eines, insbesondere handelüblichen, Kugelschreibers, oder Handschreibgerät allgemein, auf.

In einigen nicht erfindungsgemäßen Ausführungsformen weist die Blitzlichtvorrichtung einen Druckschalter zum Einschalten des Blitzlichts durch Aufbringen von Druck auf diesen auf.

In manchen nicht erfindungsgemäßen Ausführungsformen ist der Druckschalter ausgestaltet, um bei Beenden des Drucks, mit welchem das Blitzlicht einschaltet wurde, automatisch von der Ein-Stellung, in welcher das Blitzlicht leuchtet, in eine Aus-Stellung, in welcher das Blitzlicht nicht leuchtet, überzugehen. Der Druckschalter kann somit selbsttätig in die Aus-Stellung zurückkehren. Bei dieser Ausführungsform kann es vorteilhaft möglich sein, die Lichtmenge, die zum Aushärten gewünscht ist, präziser zu dosieren als bei anderen Schaltertypen.

in einigen nicht ertindungsgemäßen Austührungstormen weist die Blitzlichtvorrichtung eine Einrichtung auf, mittels welcher die Lichtabgabe kabellos initiiert oder ausgelöst bzw. gestartet werden kann. Dies kann die Arbeit mit der Blitzlichtvorrichtung auch aus einer gewissen Entfernung erlauben. Zudem kann auch bei dieser Ausführungsform eine Arbeit mit "freien Händen" vorteilhaft möglich sein.

Auch die Verwendung eines Stativs für die Blitzlichtvorrichtung oder einer Kopfhalterung für die Blitzlichtvorrichtung zu deren Befestigung am Kopfbereich des Benutzers der Blitzlichtvorrichtung ist von einigen Ausführungsformen der Erfindung umfasst. So kann die erfindungsgemäße Blitzlichtvorrichtung in einigen Ausführungsformen ein Stativ oder eine Kopfhalterung umfassen, womit jeweils die in diesem Zusammenhang bekannten Vorteile erzielbar sein können.

In einigen Ausführungsformen weist die Blitzlichtvorrichtung Linsen, Blenden oder dergleichen optischer Einrichtungen innerhalb eines Strahlenganges zum Einstellen einer austretenden Lichtmenge oder für eine optische Lichtverstärkung auf. Die hierbei erzielbaren Vorteile sind dem Fachmann bekannt.

In manchen Ausführungsformen der Blitzlichtvorrichtung weist die Einrichtung zum Fokussieren eine Reflektoreinrichtung auf oder ist eine solche.

In manchen Ausführungsformen der Blitzlichtvorrichtung weist diese wenigstens einen Filter oder einen Filteraufsatz auf mit einer Filterwirkung im Bereich von 390 bis 500 Nanometer (nm), insbesondere im Bereich von 450 bis 480 nm, insbesondere bei 470 nm, und insbesondere in einem Bereich von 400 bis 410 nm, insbesondere bei 405 nm.

In manchen Ausführungsformen der Blitzlichtvorrichtung ist die Einrichtung zum Erzeugen von Blitzlicht geeignet und vorgesehen, eine Spannung in einem Bereich von 400 bis 500 Volt zu erzeugen.

In bestimmten Ausführungsformen der Blitzlichtvorrichtung weist diese eine Einrichtung auf, mittels welcher sie an ihrem Benutzer befestigt werden kann. Die Einrichtung zum Befestigen kann eine Kopfhalterung sein. Sie kann ein Stirnband, gleich ob flexibel oder steif, z.B. als Teil eines Helms oder eines Abschnitts hiervon sein oder umfassen. Die Benutzung einer solchen Einrichtung zum Befestigen erlaubt dem Benutzer der Blitzlichtvorrichtung vorteilhaft, seine Hände frei zu behalten, zumindest aber nicht beim Aushärten des lichtaushärtenden Materials mit einer Hand die Blitzlichtvorrichtung halten zu müssen.

Offenbart wird ein Verfahren zum Aushärten eines lichtaushärtenden Materials vorgeschlagen, welches das Verwenden einer Blitzlichtvorrichtung ohne Einrichtung zum Fokussieren oder einer erfindungsgemäßen Blitzlichtvorrichtung mit einer Einrichtung zum Fokussieren umfasst.

Es wird ein Verfahren zum Aushärten eines lichtaushärtenden Materials vorgeschlagen, welches das Verwenden von Lichtleitern zwischen einem ersten Aushärte- oder Kontakt- oder Klebeabschnitt (kurz: Abschnitt bzw. Abschnitte), welcher mittels des lichtaushärtenden Materials mit einem zweiten Aushärte- oder Kontakt- oder Klebeabschnitt verbunden werden soll, und dem zweiten Aushärte- oder Kontakt- oder Klebeabschnitt umfasst.

Das Verwenden ist in bestimmten Ausführungsformen ein Einbringen des Lichtleiters oder der Lichtleiter, oder es umfasst ein solches Einbringen. Das Verfahren kann aber auch durchgeführt werden bei zuvor bereits eingebrachten Lichtleitern.

In manchen Ausführungsformen ist der Lichtleiter als eine oder mehrere Lichtfasern ausgestaltet.

Das Verwenden von derart eingebrachten oder einzubringenden Lichtleitern kann in bestimmten Ausführungsformen vorteilhaft dazu beitragen, Licht, welches zum Aushärten benötigt wird, mittels des Lichtleiters an Stellen zu bringen, an welche andernfalls kein oder nicht ausreichend Licht zum Aushärten oder vollständigen Aushärten des lichtaushärtbaren Materials einfallen würde. Derartige Stellen können entsprechend weit vom Lichtaustritt des Lichts aus der Blitzlichtvorrichtung entfernt liegen, weshalb die Lichtstärke, die zum Aushärten zur Verfügung steht, nicht zum angestrebten

Aushärten ausreicht. Sie können aber auch aufgrund einer Krümmung oder Verästelung des Verbindebereichs zwischen den Abschnitten an sich nur schlecht zu belichten sein. Derartige Stellen können sich durch eine große Schichtdicke auszeichnen.

In manchen Blitzlichtvorrichtungen sind diese Teil einer Kombination aus Lampe und Lupe. Dabei weist die entsprechende Lampen-Lupen-Kombination sowohl eine Lupe als auch eine Aushärtelampe auf. Sie kann überdies hinaus eine übliche Lese- oder Arbeitslampe mit einem beliebigen, also z.B. dem bekannten Lichtspektrum aufweisen. Es ist in manchen Ausführungsformen vorgesehen, dass die Lese- oder Arbeitslampe kein oder im Wesentlichen kein Licht ausstrahlt, welches zum Aushärten verwendet wird. So strahlt sie in bestimmten Fällen z.B. kein Licht im Bereich 390 bis 405 nm, insbesondere kein Licht im Bereich von 395 bis 400 nm aus.

Die Elemente der Lampen-Lupen-Kombination können einzeln austauschbar vorgesehen sein.

Ein offenbartes Set weist in manchen Ausführungsformen wenigstens eine Blitzlichtvorrichtung und eine Menge an lichtaushärtendem Material auf, welches mittels der Blitzlichtvorrichtung aushärtbar ist. Das Set weist somit in manchen Ausführungsformen alles auf, was der Kunde zum Verbinden, Kleben, Modellieren, Konstruieren und dergleichen benötigt.

Das Set kann in manchen Ausführungsformen neben dem lichtaushärtbaren Material und der Blitzlichtvorrichtung eine zusätzliche LED-Lampe aufweisen. Die zusätzliche LED-Lampe emittiert Licht einer Wellenlänge oder eines Spektrums von Wellenlängen, welche auf die Wellenlänge(n), bei welcher/n das lichtaushärtbare Material aushärtbar oder besonders gut aushärtbar ist, eingestellt ist.

Der Käufer eines Sets dieser Ausführungsformen hat somit die Möglichkeit, auf zwei Lampen zurück zu greifen, die sich in ihrem Einsatz- und Leistungsspektrum ergänzen können. Dies ist zum Einen die Blitzlichtvorrichtung für geringe auszuhärtende Materialstärken, und zum Anderen eine Hochleistungs-Polymerisationslampe auf LED-Basis mit einer höheren Leistung und einer damit verbundenen verkürzten Aushärtezeit. Letzteres kann sich vor allem bei größeren Modellationen oder Modellierungen mit überdurchschnittlicher Materialstärke (Schichtdicke) anbieten.

Ein offenbartes Verfahren betrifft das Verwenden eines lichtaushärtenden Materials zum Kleben oder Verbinden oder Modellieren, insbesondere im industriellen Bereich oder im nicht-gewerblichen Bereich. Zum Aushärten kommt in einigen erfindungsgemäßen Ausführungsformen vorzugsweise eine bekannte Blitzlichtvorrichtung oder eine LED-Lampe zum Einsatz. Die LED-Lampe kann vornehmlich oder ausschließlich Licht mit einer Wellenlänge von 405 nm emittieren. Dabei kann das Licht diese Wellenlänge aufgrund der Beschaffenheit des LED-Lichtkörpers und/oder aufgrund eines ggf. verwendeten Lichtfilters aufweisen. Das emittierte Licht kann blau sein, es kann weiß sein.

Der bevorzugte Wellenlängenbereich der Lichtvorrichtung kann zwischen 390 und 405, insbesondere zwischen 395 und 400 nm liegen.

Ein offenbartes Verfahren betrifft das wiederum das Verwenden eines lichtaushärtenden Materials zum Kleben oder Verbinden oder Modellieren, insbesondere im industriellen Bereich oder im nicht-gewerblichen Bereich. Zum Aushärten kommt eine optional eine bekannte oder eine LED-Lampe oder jede andere geeignete Lampe oder Lichtquelle zum Einsatz.

Das Verfahren umfasst in manchen Ausführungsformen das Einbringen des lichtaushärtenden Materials in eine Flüssigkeit (beispielsweise Wasser) oder unter einen Flüssigkeitsspiegel oder das Verwenden bereits in eine Flüssigkeit oder unter einen Flüssigkeitsspiegel verbrachten lichtaushärtenden Materials. Es umfasst zudem das Aushärten des lichtaushärtenden Materials in der Flüssigkeit oder unter dem Flüssigkeitsspiegel. Hierunter zählt beispielsweise, ohne beschränkend zu sein, das Aushärten des lichtaushärtenden Materials unter Wasser. Ein Kleben, Modellieren, Verschließen von Spalten, Rissen usw. unter Einsatz des lichtaushärtenden Materials fällt beispielsweise unter das erfindungsgemäße Verfahren wie es hier beschrieben ist.

Das Aushärten des lichtaushärtenden Materials kann mittels einer Lichtquelle erfolgen, welche sich (oder ein Abschnitt hiervon wie eine Lichtaustrittsstelle, etwa das Ende eines Lichtleiters) in oder außerhalb der Flüssigkeit (oder unter oder über dem Flüssigkeitsspiegel) befindet. Das erforderliche Licht kann somit außerhalb der Flüssigkeit erzeugt und in die Flüssigkeit eingebracht werden. Das erforderliche Licht kann somit innerhalb der Flüssigkeit erzeugt werden.

Unter einer Flüssigkeit wird in einigen Ausführungsformen ein Flüssigkeitsgemisch verstanden. Unter einer Flüssigkeit wird in manchen erfindungsgemäßen Ausführungsformen Wasser, beispielsweise Wasser einer Schwimmbades, verstanden.

Die Lichtquelle kann dabei eine Lichtquelle beliebiger Ausgestaltung sein, oder eine andere, insbesondere hierin beschriebene, Lichtquelle sein.

Eine Vorrichtung ist vorgesehen, um mit einer Struktur verbunden zu werden, wobei die Vorrichtung wenigstens eine Retention oder Vertiefung aufweist. Die Retention oder Vertiefung ist vorgesehen zum Aufnehmen einer Menge an lichtaushärtendem Material, mittels welchem die Vorrichtung mit der Struktur verbunden werden kann.

Die Verbindung erfolgt vorzugsweise zwischen jeweils wenigstens einer Oberfläche von Vorrichtung und Struktur.

Die Oberfläche der Vorrichtung und die Oberfläche der Struktur können dabei unterschiedlich raue Oberflächen aufweisen.

In manchen Ausführungsformen der Vorrichtung sind eine oder mehrere Retentionen oder Vertiefungen in einer der Struktur - bezogen auf den Zustand, in welchem Vorrichtung und Struktur miteinander verbunden sind - zugewandten Richtung offen gegenüber der Atmosphäre. Diese Öffnung erlaubt das Einbringen von lichtaushärtendem Material in die Retention vor dessen Aushärten mittels Licht. Sie kann auch eine Verbindung zwischen dem nach Erhärten des lichtaushärtenden Materials innerhalb der Retention oder Vertiefung vorliegenden lichtausgehärteten Materials und außerhalb der Retention in beiderseitigem Kontakt sowohl mit der Vorrichtung als auch mit der Struktur vorliegendem lichtausgehärtetem Material erlauben.

In einigen Ausführungsformen der Vorrichtung ist diese vorgesehen, um mittels einer erfindungsgemäßen Blitzlichtvorrichtung und/oder eines erfindungsgemäßen Verfahrens verbunden zu werden.

In manchen Ausführungsformen der Vorrichtung weist diese wenigstens eine Retention auf, welche eine Hinterschneidung aufweist oder darstellt, welche sich ganz oder teilweise innerhalb der Vorrichtung befindet.

Die Retention kann dabei eine Durchgangsöffnung in der Vorrichtung sein. Sie kann eine Sacköffnung sein. Im Falle einer Sacköffnung ist deren Öffnung vorzugsweise im Verbindungszustand mit der Struktur dieser zugewandt.

Die Vorrichtung kann als ein Haken ausgestaltet sein, der an einer Fläche angebracht werden soll. In bestimmten Ausführungsformen ist sein Grundmaterial lichtdurchlässig, insbesondere in einem hierin genannten Wellenlängenbereich.

Die Vorrichtung kann neben Retentionen, oder altemativ zu solchen, Perforationen oder Sacköffnungen aufweisen, welche ebenfalls lichtaushärtendes Material aufnehmen können.

In einigen Ausführungsformen der Vorrichtung ist diese aus einem ersten Material hergestellt oder weist ein solches auf, und ist vorgesehen zu ihrer Verbindung mittels des lichtaushärtenden Materials mit einer Struktur, welche aus einem zweiten Material hergestellt ist oder ein solches aufweist. Dabei sind das erste und das zweite Material voneinander verschieden. Letzteres kann insbesondere deren Oberflächeneigenschaften, und ganz insbesondere deren Rauhigkeit betreffen. So kann die Vorrichtung aus einem glatteren Material oder mit einer glatteren Oberfläche hergestellt sein als die Struktur oder deren Oberfläche.

In manchen Ausführungsformen ist die Vorrichtung eine Schutzecke oder eine Schutzeinrichtung beliebiger Form oder weist eine solche auf. Die Vorrichtung kann eine Schutzecke oder Schutzeinrichtung für Haushaltsmöbel sein. Die erfindungsgemäße Vorrichtung kann als Schutzecke zum Abdecken von Ecken oder Kanten von Möbeln sein. Die Schutzfunktion der erfindungsgemäßen Vorrichtung kann jenen Schutzecken entsprechen, welche heute zum Schutz für Kinder an Möbeln angebracht werden mit dem Ziel, die Verletzungswahrscheinlichkeit für die Kinder an den Möbeln zu senken.

Die erfindungsgemäße Aufgabe wird durch die Vorrichtung mit den Merkmalen des Anspruchs 1 gelöst.

Die erfindungsgemäße Vorrichtung weist wenigstens ein Reservoir für eine Menge an lichtaushärtendem Material und/oder wenigstens eine lichtemittierende Einrichtung zum Aushärten des lichaushärtenden Materials auf.

In manchen erfindungsgemäßen Ausführungsformen ist die wenigstens eine lichtemittierende Einrichtung eine LED-Lampe.

In einigen erfindungsgemäßen Ausführungsformen weist die erfindungsgemäße Vorrichtung ein vollständig oder wenigstens in Abschnitten hiervon lichtdichtes Gehäuse, auf.

Die Lichtdichtigkeit kann in bestimmten Ausführungsformen ganz oder im Wesentlichen auf Licht einer Wellenlänge beschränkt sein, welches zum Aushärten des aushärtbaren Materials führt.

In manchen erfindungsgemäßen Ausführungsformen liegt das wenigstens eine Reservoir vollständig in einem Inneren der Vorrichtung.

In bestimmten Ausführungsformen weist das Gehäuse der Vorrichtung die Gestalt eines Kugelschreibers, eines Handschreibgeräts allgemein oder eines anderen Handwerkzeugs auf. Das Gehäuse kann besonders griffgünstige Abschnitte aufweisen, beispielsweise eine Fingerauflage für Zeigefinger und Daumen. In manchen erfindungsgemäßen Ausführungsformen weist die Fingerauflage eine bei Anfassen mit der Hand rutschfeste Beschaffenheit auf. In einigen erfindungsgemäßen Ausführungsformen weist die Fingerauflage eine Oberflächenbeschaffenheit auf, in welcher sie sich von anderen Abschnitten und/oder den wesentlichen oder größten Abschnitte der Vorrichtung unterscheidet.

In manchen erfindungsgemäßen Ausführungsformen weist das wenigstens eine Reservoir ein Volumen im Bereich zwischen 2 bis 10 Milliliter (ml), insbesondere im Bereich zwischen 2 bis 6 ml, und insbesondere für 4 ml auf.

Das Reservoir hat vorzugsweise eine Öffnung, durch die das lichtaushärtende Material austreten kann. Die Öffnungsgröße, z. B. der Öffnungsquerschnitt, kann mit Blick auf die Dosierung des Reservoir-Volumens ausgelegt werden, d.h. für eine feine Dosierung eine kleine Öffnungsgröße und für eine grobe Dosierung eine größere Öffnung haben.

Der Öffnungsquerschnitt kann rund oder nicht-rund sein.

Die lichtemittierende Einrichtung kann eine LED-Lampe sein Diese ist in manchen Ausführungsformen eine Hochleistungs-Polymerisationslampe auf LED-Basis. Die LED-Lampe kann vornehmlich oder ausschließlich Licht mit einer Wellenlänge von 405 nm emittieren. Dabei kann das Licht diese Wellenlänge aufgrund der Beschaffenheit des LED-Lichtkörpers und/oder aufgrund eines ggf. verwendeten Lichtfilters aufweisen.

Das emittierte Licht ist in manchen erfindungsgemäßen Ausführungsformen blau. Alternativ ist es weiß.

Der bevorzugte Wellenlängenbereich der Lichtvorrichtung kann zwischen 390 und 405, insbesondere zwischen 395 und 400 nm liegen.

Die Vorrichtung weist einen Dosiermechanismus zum Ausbringen von lichtaushärtbaren Materials aus dem Reservoir und/oder aus der Vorrichtung heraus auf.

In bestimmten erfindungsgemäßen Ausführungsformen ist der Dosiermechanismus ein Austreibmechanismus, welcher nicht oder nicht vornehmlich einer genauen Dosierung dient.

In einigen erfindungsgemäßen Ausführungsformen ist der Dosiermechanismus mit einer Verschiebeeinrichtung und/oder einer Druckeinrichtung zum Ausüben von Druck auf das Reservoir ausgestaltet. In manchen erfindungsgemäßen Ausführungsformen ist der Dosiermechanismus ähnlich einem Mechanismus eines Kugelschreibers ausgestaltet und/oder weist einen Druckknopf auf.

Der Dosiermechanismus ist in bestimmten erfindungsgemäßen Ausführungsformen ein verformbarer oder verformbar ausgestalteter Abschnitt des Gehäuses. Der Dosiermechanismus ist in manchen Ausführungsformen als ein verformbares Reservoir zur Ausbringung des lichtaushärtenden Materials ausgestaltet.

Der Dosiermechanismus weist in manchen erfindungsgemäßen Ausführungsformen wenigstens ein Bauteil auf, welche zum Zwecke des Dosierens relativ zum (ggf. übrigen) Gehäuse der Vorrichtung verschiebbar ausgestaltet ist.

Der Dosiermechanismus kann handgesteuert oder -betätigbar sein.

Ein handgesteuerter Dosiermechanismus kann ein Mechanismus sein, der per Hand ein vorgegebenes Volumen z.B. durch einen Druckimpuls auf einen Kolben auslöst. Ähnlich einer Pipetiereinrichtung, mit der verschiedene Volumina per Hand-Druck-Auslösung über die Pipette ausbringt, kann hier ein bestimmtes Volumen an lichtaushärtendem Material mittels des Dosiermechanismus ausgebracht werden. Das bestimmte Volumen kann mittels der Größe des Kolbens, der z. B. per Druckschalter oder Druckknopf aktiviert wird, vorgegeben werden.

Der Druckschalter oder Druckknopf ist vorzugsweise an der gegenüberliegenden Stirnseite der Vorrichtung, bezogen auf die Austrittsöffnung des Reservoirs, angeordnet.

Ein handgesteuerter Dosiermechanismus kann weiterhin ein Mechanismus sein, der per Drehbewegung, vorzugsweise mit einzelnen Stufen bei der Drehung, ein bestimmtes Volumen verdrängt. Dies kann beispielsweise durch eine Übersetzung von Drehbewegung auf eine translatorische Kolbenbewegung erfolgen. Die Kolbenbewegung kann das Reservoir verformen und damit den Austritt einer bestimmten Menge an lichtaushärtendem Material bewirken.

Der handgesteuerte Dosiermechanismus zur Drehbewegung kann ein Drehmechanismus sein, der als Teil des Gehäuses an der der Reservoiröffnung gegenüberliegenden Stirnseite der Vorrichtung angeordnet ist.

Der Dosiermechanismus weist in bestimmten erfindungsgemäßen Ausführungsformen wenigstens ein Bauteil auf, welche zum Zwecke des Dosierens betätigt werden muss.

Das Reservoir kann derart im Gehäuse angeordnet sein, dass durch eine Verformung des Gehäuses, etwa durch Druckausübung des Zeigefingers und/oder des Daumens im Bereich der Fingerauflage, das Reservoir ebenfalls verformt wird. Durch diese Verformung des Reservoirs kann lichtaushärtendes Material austreten.

Das Gehäuse ist in bestimmten Ausführungsformen lediglich im Bereich des Reservoirs verformbar, insbesondere zerstörungsfrei und/oder unter Gebrauchsbedingungen. In anderen erfindungsgemäßen Ausführungsformen ist es darüber hinaus oder vollständig verformbar.

In manchen erfindungsgemäßen Ausführungsformen weist die Vorrichtung das Reservoir und die lichtemittierende Einrichtung, z. B. die wenigstens eine LED-Lampe, an zwei gegenüberliegenden Enden (bezogen auf eine Längsachse der Vorrichtung) auf. Diese Bereiche können auch als Stirnbereiche bezeichnet werden.

Bei einer Form des Gehäuses als Handschreibgerät kann die Vorrichtung einerseits zum Ausbringen und Dosieren des lichtaushärtenden Materials verwendet werden, andererseits bei Drehung um beispielsweise 180 Grad um eine Mittel- oder Querachse der Vorrichtung zum Aushärten des lichtaushärtenden Materials mittels der lichtemittierenden Einrichtung, z. B. der LED-Lampe.

Die lichtemittierende Einrichtung, z. B. die LED-Lampe, kann aus der Vorrichtung entnommen werden. Die lichtemittierende Einrichtung kann dann als eigenständige Einheit als Aushärtelampe verwendet werden. Die lichtemittierende Einrichtung kann mittels eines elastischen Clip- oder Schnappverschlusses an oder an dem exemplarisch als Kunststoffgehäuse ausgeführten Gehäuse befestigt werden, vorzugsweise auf zerstörungsfrei erneut abnehmbare Weise.

In manchen erfindungsgemäßen Ausführungsformen weist die Vorrichtung einen Abschnitt zum Anbringen eines Aufsatzes an der Vorrichtung, wobei mittels des Aufsatzes ein Ausbringen und/oder Dosieren des lichtaushärtenden Materials begünstigt wird. Der Aufsatz kann z. B. als Düse ausgestaltet sein. Über den Aufsatz kann in bestimmten Ausführungsformen das Reservoir (erstmalig oder erneut) mit lichtaushärtendem Material befüllt werden.

In einigen erfindungsgemäßen Ausführungsformen weist die Vorrichtung einen adaptierbaren Anschluss oder einen Aufsatz auf zum Ausbringen und Dosieren des lichtaushärtenden Materials und/oder zum Befüllen des Reservoirs auf.

Der adaptierbare Anschluss oder der Aufsatz kann wieder lösbar sein, er kann alternativ nicht wieder lösbar sein. Ein nicht wieder lösbarer Anschluss oder Aufsatz ist in bestimmten Ausführungsformen durch einen Schnappverschluss, beispielsweise einen elastischen Haken, der nach dem Aufsetzen auf die Vorrichtung einschnappt, ausgeführt. Der wieder lösbarer Anschluss oder Aufsatz wird in manchen Ausführungsformen aufgesteckt, aufgeschraubt, mittels eines Bajonettverschlusses fixiert oder mittels einer anderen Befestigungsart verbunden.

Ein wieder lösbarer Anschluss oder Aufsatz kann nach einmaliger oder mehrmaliger Anwendung wieder gelöst werden. Beispielsweise kann je nach Anwendung ein anderer Adapter mit jeweils einem anderen Öffnungsquerschnitt oder -profil für unterschiedliche Dosierungen verwendet werden.

Zum Befüllen des Reservoirs kann der gleiche Adapter oder Aufsatz, wie er zum Ausbringen und Dosieren verwendet wird, verwendet werden. Es kann jedoch auch ein anderer, speziell zum Befüllen geeigneter Adapter verwendet werden. Dieser kann beispielsweise eine spezielle Form zum Aufsetzen und/oder Fixieren eines externen Befüllbehälters aufweisen. Weiterhin kann der Öffnungsquerschnitt des Adapters wesentlich größer als zum Ausbringen und Dosieren sein, um den Befüllvorgang zügig durchzuführen, um beispielsweise ein vorzeitiges Aushärten von Lichtanteilen während des Befüllvorgangs weitgehend zu vermeiden.

In manchen erfindungsgemäßen Ausführungsformen weist die Vorrichtung eine Verschlusskappe auf, die auf die stirnseitige Öffnung des Reservoirs oder dessen Ausflusswegs wieder lösbar auf das Gehäuse aufgesetzt wird. Die Verschlusskappe kann durch eine Reibpaarung oder andere dem Fachmann bekannte Verfahren oder Vorrichtung auf oder mit dem Gehäuse - insbesondere vorübergehend - fixiert werden. Diese Verschlusskappe ist vorzugsweise lichtundurchlässig, zumindest für Licht mit Wellenlängenbereichen, bei welchen das lichtaushärtende Material aushärtet. Die Verschlusskappe kann mit oder ohne adaptierbarem Anschluss zum Ausbringen und Dosieren aufgesetzt werden.

Die erfindungsgemäße Aufgabe wird gleichermaßen durch das Verfahren gemäß Anspruch 5 gelöst.

Dabei wird ein Verfahren zum Ausbringen und/oder zum Aushärten des lichtaushärtenden Materials unter Verwenden einer erfindungsgemäßen Vorrichtung mit wenigstens einem Reservoir für eine Menge an lichtaushärtendem Material und/oder einer lichtemittierenden Einrichtung, vor allem einer LED-Lampe, vorgeschlagen.

Die Ausbringung des lichtaushärtenden Materials kann mittels händischer Druckaufbringung auf das Gehäuse, auf eine Druck- oder Verschiebeeinrichtung und/oder das Reservoir erfolgen. Mit einer händischen Druckaufbringung kann vorteilhaft mit der für die jeweilige Anwendung erforderlichen Genauigkeit dosiert werden.

In einer erfindungsgemäße Ausführungsform des Verfahrens wird zum dosierten Ausbringen des lichthärtenden Materials aus dem Reservoir eines handgesteuerter Dosiermechanismus betätigt.

In manchen erfindungsgemäßen Ausführungsformen des Verfahrens wird vorgeschlagen, welches nach dem Ausbringen des Materials ein Drehen, Umdrehen oder Kippen der Vorrichtung um eine Querachse der Vorrichtung mit anschließender Aktivierung der Aushärtung mit der lichtemittierenden Einrichtung, z.B. der LED-Lampe, umfasst.

Die erfindungsgemäße Aufgabe wird auch durch das Set mit den Merkmalen des Anspruchs 8 gelöst.

Das Set weist wenigstens eine erfindungsgemäße Vorrichtung und eine Menge an lichtaushärtendem Material auf.

In bestimmten Ausführungsformen weist das Set ferner eine Verschlusskappe für die Vorrichtung und/oder einen oder mehrere Aufsätze zum Dosieren des lichtaushärtenden Materials für die Vorrichtung auf.

Das erfindungsgemäße Set ist in manchen Ausführungsformen mittels einer Sichtverpackung (die auch als Blister bezeichnet wird) verpackt, welche die erfindungsgemäße Vorrichtung mit einem Reservoir und/oder eine LED-Lampe, eine Menge an lichtaushärtendem Material und eine Verschlusskappe für die Vorrichtung aufweist.

Wenn hierin die Rede von einer Lichtquelle, Blitzlichtvorrichtung oder anderen Vorrichtung die Rede ist, welche zum Aushärten des lichtaushärtenden Materials geeignet und/oder vorgesehen und/oder konfiguiert ist, so kann diese flüssigkeitsdicht oder wasserdicht ausgestaltet sein. Dabei ist der Begriff flüssigkeitsdicht oder wasserdicht derart zu verstehen, dass die Vorrichtung zum Aushärten zum wiederholten Einsatz in Flüssigkeit oder im Wasser verwendet werden kann. Diese Eignung kann mittels geeigneter Abdichtungen, Überzüge, Isolierungen und/oder dergleichen erzeugt werden.

Mittels der offenbarten Blitzlichtvorrichtung ist es vorteilhaft möglich, mit kostengünstigen Mitteln Gegenstände zu kleben, dauerhaft oder vorübergehend miteinander zu verbinden, Strukturen zu modellieren. Beim Modellieren können neben dem Abbilden von Gegenständen beispielsweise Haken oder Aufhänger erzeugt werden. Aufgrund und in Abhängigkeit von den eingesetzten lichtaushärtenden Materialien können z.B. Haken oder dergleichen erzeugt werden, welche auf Glas, Fließen, Holz, Kunststoff, Stein etc. haften.

Dabei unterscheidet sich der Einsatz des erfindungsgemäßen Verfahrens von bekannten Verfahren sowie den "klassischen" Klebesystemen des Standes der Technik unter anderem darin, dass erfindungsgemäß ein Aushärten des verwendeten "Klebe"materials, also des lichtaushärtbaren Materials, nicht abgewartet werden muss. Die Verbindungswirkung des lichtaushärtenden Materials ist praktisch sofort gegeben.

Damit kann mittels des erfindungsgemäßen Verfahrens in manchen Ausführungsformen zeitsparender verbunden werden. Zudem kann ein anstrengendes Halten von zu verbindenden Teilen oder Elementen entfallen. Diese Teile und Elemente können in Stellung gebracht werden und werden nach Überprüfen der Stellung zueinander durch gezielte Beleuchtung fixiert. Das Fixieren erfolgt im Moment des Aushärtens. Dieses kann innerhalb eines Sekundenbruchteils erfolgen. Eine primäre Fixierung von Elementen kann damit im Handumdrehen erledigt werden. Eine primäre Fixierung wird schon nach 300 - 500 ms erreicht. Nach ca. 5 s - 8 s ist der Härteprozess abgeschlossen. Eventuelle nachträgliche Verstärkungen der Verbindungsstellen können ohne Zeitdruck erledigt werden.

Je nach Auswahl des verwendeten, lichtaushärtenden Materials kann dieses jederzeit rückstandslos wieder entfernt werden. Verbindungen können problemlos und schnell gelöst werden und Oberflächen bleiben absolut unversehrt. Damit kann das erfindungsgemäße Verfahren in manchen Ausführungsformen bedenkenlos in Miet- und Ferienwohnungen, Ausstellungen und Messen und dergleichen ausgeführt werden. Der ausgehärtete Klebstoff kann rückstandsfrei entfernt werden.

Im privaten, im industriellen oder gewerblichen, im nicht-zahnärztlichen Bereich kann das erfindungsgemäße Verfahren in der Bastel- und Modellbauszene ebenso wie in Architektur-, Planungs- und Ingenieurbüros, der Elektronik und Medizintechnik bis hin zu Anwendungen im Bereich Hobby und Haushalt zum Einsatz kommen.

Je nach Leistung der verwendeten Blitzlichtvorrichtung oder Polymerisationslampe kann eine höhere Leistung und eine damit verbundene verkürzte Aushärtezeit erreicht werden.

Eine hohe Viskosität des lichtaushärtenden Materials bedeutet eine ausreichende Standfestigkeit. Diese Eigenschaft, gepaart mit dem individuellen Zeitpunkt der Aushärtung bietet die Möglichkeit, Objekte schichtweise zu kreieren bzw. aufzubauen.

Das verwendete lichtaushärtende Material kann ggf. durch Fräsen und Polieren nachbearbeitet werden.

Mittels des erfindungsgemäßen Verfahrens lassen sich - vor allem bei Einsatz auch der offenbarten Blitzlichtvorrichtung - besonders gut kleinflächige Verbindungen und Punktverbindungen sowie Verbindungen zwischen ungleichmäßigen Oberflächen schaffen.

Es lassen sich vorteilhaft ferner beliebige Objekte wie Schmuck, Deko, Kunst etc. duplieren. Dazu kann es genügen, einen Abdruck oder eine Form eines Gegenstands zu schaffen und nach Entnahme des Gegenstands aus der Form diese mit dem lichtaushärtenden Material zu füllen. Dieses kann mit der erfindungsgemäßen Blitzlichtvorrichtung oder mit der LED-Standardlampe innerhalb der Form ausgehärtet werden. Nach Entnahme des festen Materials aus der Form kann dieses bei Bedarf noch einmal kurz von allen Seiten beleuchtet werden. Auf Wunsch kann der nun fertige "Klon" unter Einsatz von Werkzeugen nachbearbeitet werden.

Mittels der vorliegenden Erfindung kann somit mit nur einem lichtaushärtenden Verbundwerkstoff und einem neuartigen Lichtsystem erstmals statt der kostenintensiven UV-Klebetechnik der Industrie eine preiswerte und überaus leicht zu handhabende Lösung von Jedermann eingesetzt werden.

Die erzielten Verbindungen können reversibel sein. Das verwendete lichtaushärtende Material kann rückstandslos entfernt werden und greift die Oberflächen der Objekte nicht an.

Mittels des erfindungsgemäßen Verfahrens lassen sich vorteilhaft Fugen füllen. Dies kann in manchen Ausführungsformen vorteilhaft dem Abdichten gegen Ein- oder Austreten von Feuchtigkeit oder Flüssigkeit dienen. Auch hierbei kann vorteilhaft ohne Zeitdruck gearbeitet werden: das verwendete Material wird nicht eher hart, als der Benutzer dies möchte und mittels Lichteinsatz bewirkt. Daher kann auch hierbei zunächst in aller Ruhe positioniert werden und anschließend innerhalb von Sekunden ausgehärtet werden.

Mittels des erfindungsgemäßen Verfahrens lassen sich vorteilhaft ferner Objekte schichtweise kreieren. Das erfindungsgemäße Verfahren eignet sich in manchen Ausführungsformen daher auch vorzüglich zum dreidimensionalen Drucken oder anderweitigen Aufbau von Objekten aus dem verwendeten lichtaushärtenden Material oder zu deren ergänzender Bearbeitung.

Mittels der Vorrichtung nach manchen der erfindungsgemäßen Ausführungsformen lässt sich einerseits das lichtaushärtende Material einfach applizieren, indem die Vorrichtung mit einer Hand gehalten und bedient wird. In vorteilhafter Weise lässt sich anschließend durch ein Drehen, Kippen oder Wenden der Vorrichtung um beispielsweise 180 Grad (also um eine Querachse der Vorrichtung) das applizierte Material mittels der LED-Lampe auf der gegenüberliegenden Stirnseite der Vorrichtung aushärten. Die Abfolge der Tätigkeiten, Applizieren und anschließend nach Drehung der Vorrichtung Aushärten, verhindert vorteilhaft, dass das lichtaushärtende Material aus der Vorrichtung ausläuft, auch wenn keine Verschlusskappe auf eine Ausflussöffnung des Reservoirs gesetzt wurde. Letzteres ist bei dieser Handhabung nicht erforderlich, was das Arbeiten mit der erfindungsgemäßen Vorrichtung sehr einfach und angenehm machen kann. Insgesamt ist die Handhabung der Vorrichtung einfach und sicher.

Ein mögliches Anwendungsbeispiel der vorliegenden Erfindung ist das Aufkleben von künstlichen Fingernägeln, wie es aus dem Nagelstudio her bekannt ist. Die vorliegende Erfindung kann hierbei vorteilhaft zu einer erheblichen Zeiteinsparung beitragen.

Ein weiteres Anwendungsbeispiel der vorliegenden Erfindung ist das Kleben, Reparieren, Befestigen usw. von Gegenständen wie Fliesen, Befestigungen oder dergleichen, welche in einer Flüssigkeit vorliegen. So kann mittels des erfindungsgemäßen Verfahrens in einigen Ausführungsformen beispielsweise ein Riss einer Fliese unter Einsatz des lichtaushärtenden Materials unter Wasser und damit im Nassen erfolgen. Das Ablassen des Wassers eigens zu dem Zweck, anschließend den Riss in trockener Umgebung zu verschließen, ist erfindungsgemäß nicht erforderlich. Dies erlaubt es vorteilhaft, Aufwand und Kosten im Zusammenhang mit Arbeiten an Gegenständen, welche z.B. unter Wasser liegen, wie der Rumpf eines Schiffs, einzusparen.

Die vorliegende Erfindung wird im Folgenden anhand der beigefügten Zeichnung, in welcher identische Bezugszeichen gleiche oder ähnliche Bauteile bezeichnen, exemplarisch erläutert. In den zum Teil stark vereinfachten Figuren gilt:
- Fig. 1: zeigt schematisch vereinfacht eine erfindungsgemäße Vorrichtung in einer perspektivischen Ansicht;
- Fig. 2: zeigt einen Schnitt durch die erfindungsgemäße Vorrichtung der Fig. 1;
- Fig. 3: zeigt eine weitere erfindungsgemäße Vorrichtung in Gestalt eines Hakens;
- Fig. 4: zeigt eine erfindungsgemäße Blitzvorrichtung zum Aushärten des lichtaushärtenden Materials in Gestalt einer Lampen-Lupenkombination;
- Fig. 5: zeigt eine weitere erfindungsgemäße Vorrichtung mit einem Reservoir für das lichtaushärtende Material und einer LED-Lampe; und
- Fig. 6: zeigt die Vorrichtung aus Fig. 5 in einer möglichen Anwendung.

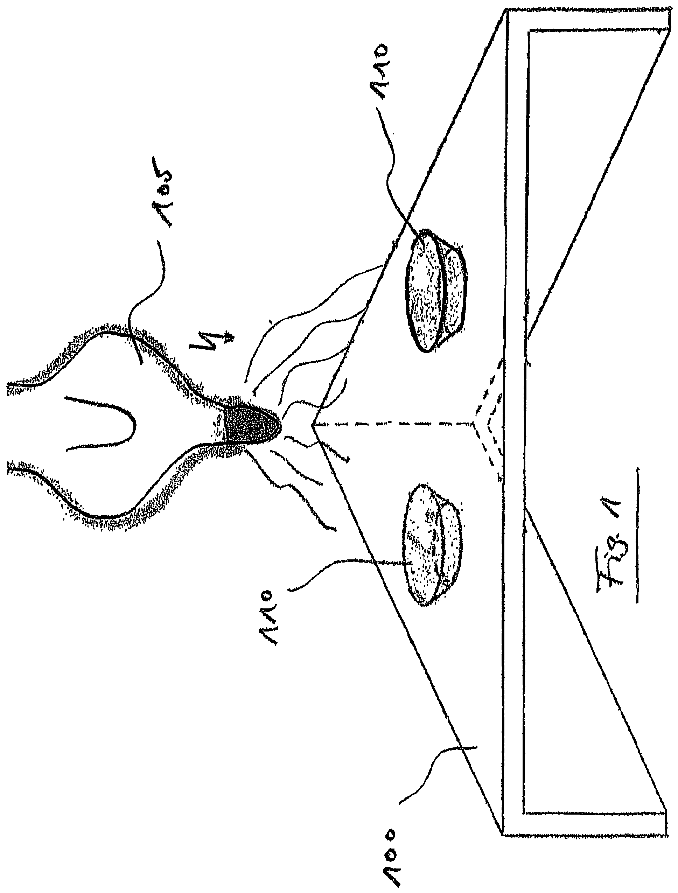

Fig. 1 zeigt schematisch vereinfacht eine erfindungsgemäße Vorrichtung in Gestalt einer Schutzecke 100 in einer perspektivischen Ansicht. Sie ist nicht nur geeignet sondern ausdrücklich vorgesehen, um mit einer Struktur (in Fig. 1 nicht gezeigt) verbunden zu werden.

Eine solche Verbindung kann mittels einer Blitzlichtvorrichtung 105 oder anderen, geeigneten Lichteinrichtungen erfolgen. Die Schutzecke 100 weist zwei Retentionen 110 auf, wobei die Anzahl zwei hier rein exemplarisch zu verstehen ist.

Die Retentionen 110 sind vorgesehen zum Aufnehmen einer Menge an lichtaushärtendem Material 120. Dieses kann mittels des Blitzlichts 105 zum Verbinden der Schutzecke 100 mit der Struktur 200 ausgehärtet werden. Das lichtaushärtende Material 120 ist in Fig. 1 im Kontrast dunkler gegenüber der ansonsten - beispielhaft - transparent ausgestalteten Schutzecke 100 dargestellt.

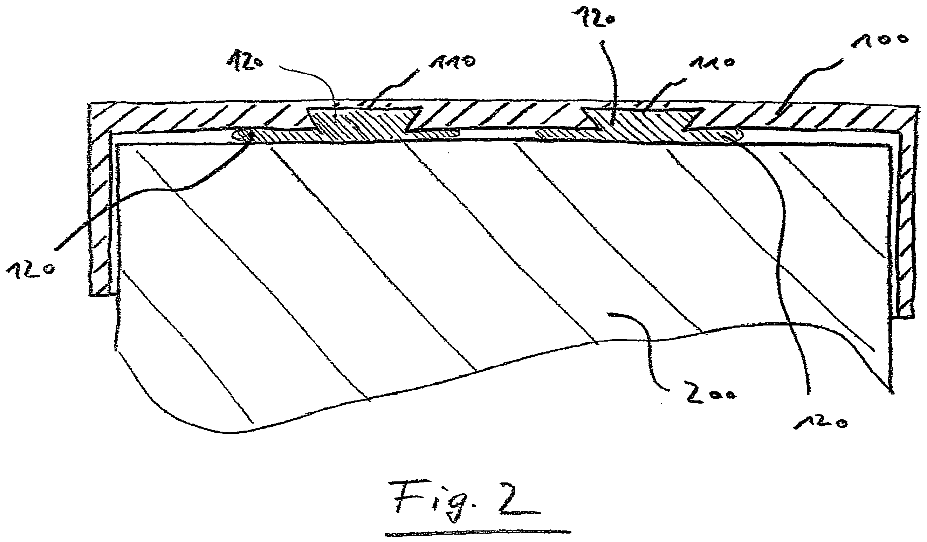

Wie Fig. 1 und auch Fig. 2 zu entnehmen ist, sind die Retentionen 110 als Hinterschneidung innerhalb der Schutzecke 100 ausgestaltet. Mittels der Retentionen und der damit verbundenen Möglichkeit hierin lichtaushärtendes Material aufzunehmen, ist es vorteilhaft möglich, die Schutzecke 100 nach Aushärten an dem Haushaltsmöbel200 auch dann zu halten, wenn die Schutzecke 100 keine Oberflächenbeschaffenheiten für eine dauerhafte oder beständige oder zuverlässige Verbindung mittels dem lichtaushärtenden Material 120 aufweist. Durch das Vorsehen der Retentionen 110 kann es möglich sein, einen zuverlässigen Halt zwischen Schutzecke 100 und Struktur 200 zu erzeugen, selbst wenn das lichtaushärtende Material 120 nicht geeignet ist, eine oder eine ausreichend stabile Klebeverbindung zwischen Schutzecke 100 und lichtaushärtendem Material 120 zu erzeugen. Die Verbindung wird weniger oder gar nicht durch Klebewirkung zwischen Schutzecke 100 und lichtaushärtendem Material 120 erzeugt, sie wird vielmehr durch Kraft- und/oder Formschluss erzeugt indem das lichtaushärtende Material 120 in der Retention 110 aushärtet und durch die Aushärtung mit der Schutzecke 100 verbunden ist.

Die exemplarisch als Schutzecke 100 ausgestaltete Vorrichtung kann dabei aus einem ersten Material hergestellt sein oder ein solches aufweisen; die Struktur 200 kann aus einem zweiten Material hergestellt sein oder ein solches aufweisen, wobei das erste und das zweite Material voneinander verschieden oder gleich sind.

Die Struktur 200 kann ein Haushaltsmöbel oder jede andere Struktur sein.

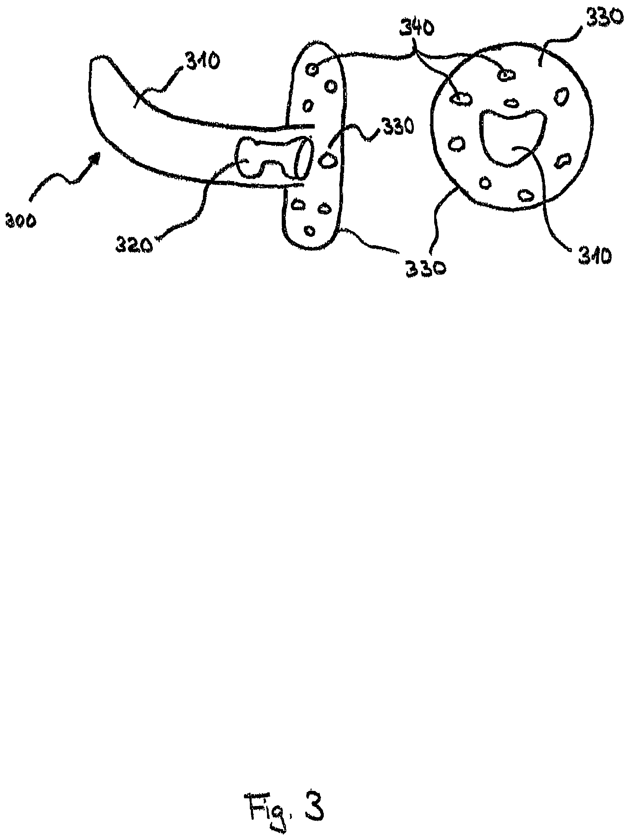

Fig. 3 zeigt eine weitere erfindungsgemäße Vorrichtung in Gestalt eines Hakens 300. Dieser ist in der linken Darstellung der Fig. 3 als Seitenansicht und in der rechten Darstellung als Frontansicht dargestellt. Der Haken 300 weist einen Hakenabschnitt 310 mit einem Retentionsraum 320 auf. Der Haken 300 weist ferner eine Basis-Retentionsplatte 330 auf. In der Retentionsplatte 330 finden sich Perforationen 340. Sie können überschüssiges lichtaushärtendes Material vor dessen Aushärtung aufnehmen. Auf diese Weise ist das überschüssige Material "verräumt"; zudem kann es einen eigenen Beitrag zur erzielbaren Klebefestigkeit zwischen Haken 300 und nicht gezeigter Wandfläche leisten.

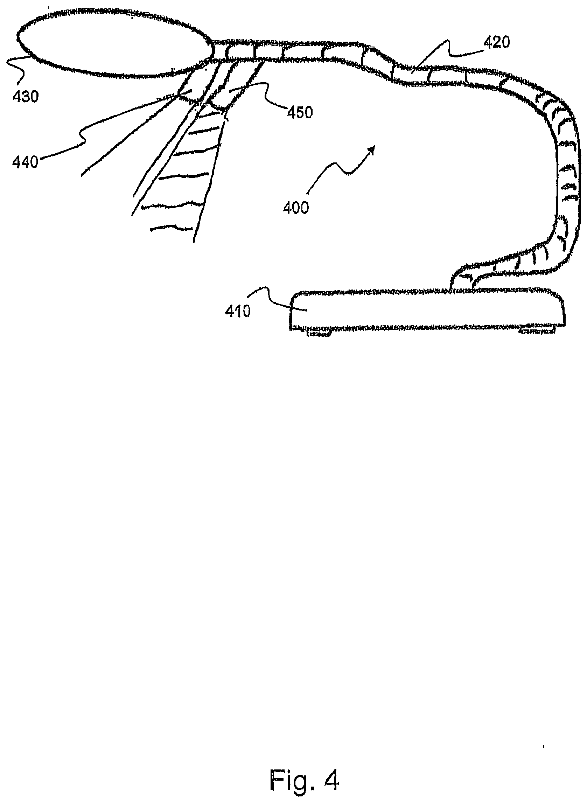

Fig. 4 zeigt eine erfindungsgemäße Blitzvorrichtung zum Aushärten des lichtaushärtenden Materials in Gestalt einer Lampen-Lupenkombination 400. Diese steht auf einem Fuß 410 und ist in einem Bereich 420 flexibel ausgestaltet. Die Lampen-Lupenkombination 400 trägt eine Lupe 430 oder mehrere, ggf. verschieden starke Lupen. Eine erste Lampe 440 strahlt das zum Aushärten erforderliche Licht aus. Eine zweite, optionale Lampe 450 strahlt beliebiges Licht aus und kann z. B. zum Arbeiten oder Ausleuchten verwendet werden. In bestimmten Ausführungsformen strahlt die zweite Lampe 450 beliebige Licht, nicht aber solches aus, welches zum Aushärten verwendet wird. Die zweiten Lampe 450 strahlt in manchen Ausführungsformen kein oder im Wesentlichen kein Licht im Wellenlängenbereich der ersten Lampe 440 aus.

Zum Betätigen der ersten Lampe 440 kann ein Fußschalter, ein Handschalter, ein akustischer Schalter oder dergleichen vorgesehen sein.

Der Fuß 410 kann mittels Klemme, Magnet, Standfuss oder dergleichen befestigbar sein. Er kann eine Antirutsch-Beschichtung haben oder ein Antirutschmaterial aufweisen.

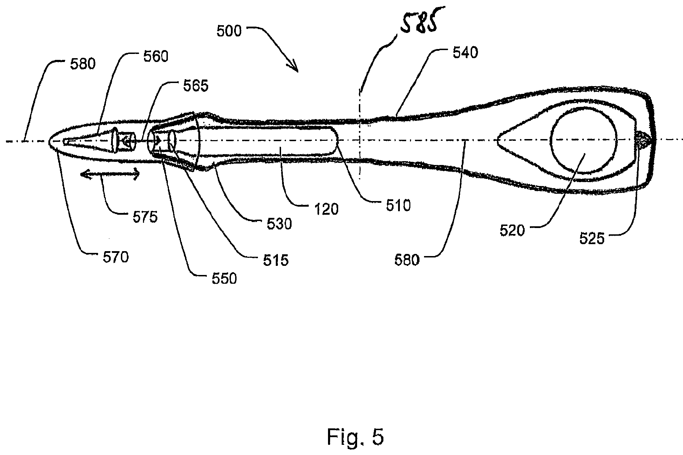

Fig. 5 zeigt eine weitere erfindungsgemäße Vorrichtung in Gestalt eines Stifts 500 mit einem Reservoir 510 für das lichtaushärtende Material 120 und mit einer LED-Lampe 520 als Beispiel für eine lichtemittierende Einrichtung.

Der Stift 500 ist dafür vorgesehen, zu seinem Verwenden mit einer Hand gehalten zu werden. Für eine vorteilhaft genaue und sichere Führung und Handhabung des Stifts 500 mit der Hand ist eine nicht zwingend erforderliche Fingerauflage 530 vorgesehen.

Das Gehäuse 540 des Stifts 500 ist vorteilhaft lichtundurchlässig und aus Produktionsgründen aus Kunststoff hergestellt. Im Bereich der Fingerauflage 530 ist das Gehäuse 540 weicher oder flexibler als das übrige Gehäuse 540. Dadurch kann mit den Fingern Druck über die Fingerauflage 530 auf das Gehäuse 540 und damit Druck auf das innenliegende Reservoir 510 ausgeübt werden. Durch diesen Druck erfolgt eine Komprimierung des Reservoirs 510 im mittleren und hinteren, geschlossenen Teil des Reservoirs 510. Dadurch wird das lichtaushärtende Material 120 aus dem Reservoir 510 durch die Austrittsöffnung oder Reservoiröffnung 515 aus dem Stift 500 heraus abgegeben.

An die Austrittsöffnung 515 schließt sich ein (optionaler, nicht zwingend erforderlicher) Adapter 550 an, der dafür vorgesehen ist, eine aufsteckbare oder aufschraubbare, vorzugsweise lichtundurchlässige, Düse 560 (als Beispiel eines Aufsatzes) zu adaptieren oder aufzunehmen. Die Bewegungsrichtung der Düse, sowohl beim Aufsetzen als auch beim Abnehmen der Düse 560 wird durch den Pfeil 565 dargestellt. Mit dieser Düse 560 kann das zu applizierende, lichtaushärtende Material 120 entsprechend dem Düsenöffnungsquerschnitt fein dosiert werden. Die Düse 560 kann auch dafür verwendet, das Reservoir 510 mit lichtaushärtendem Material 120 zu befüllen.

Weiterhin ist in einem der Stirnbereiche der Vorrichtung eine Verschlusskappe 570 auf das Gehäuse 540 aufsteckbar. Die Verschlusskappe 570 ist u. a. lichtundurchlässig, damit z. B. verbleibendes lichtaushärtendes Material 120 in der Verschlusskappe nicht aushärtet, etwa mittels Umgebungslicht. Die Verschlusskappe 570 kann zudem einen vorteilhaften Schutz gegen allgemeine Verschmutzung bieten und als eine Transportsicherung etc. dienen. Die Verschlusskappe 570 wird in der gezeigten Richtung 575 aufgesetzt bzw. abgenommen.

Am anderen Stirnbereich oder Ende des Gehäuses 540, bezogen auf die Längsachse 580 der Vorrichtung, befindet sich die LED-Lampe 520. Diese LED-Lampe 520 ist beispielsweise in das Gehäuse 540 eingesteckt. Sie ist vorzugsweise mittels einer Hinterschneidung im Gehäuse 540, das aus elastischem Kunststoff besteht kann oder ein solches aufweist, fixiert. Somit ist die LED-Lampe 520 in bestimmten Ausführungsformen von der Vorrichtung abnehmbar. Die LED-Lampe 520 ist in der in Fig. 5 gezeigten Ausführungsform mittels eines Schalters 525 per Fingerdruck an- bzw. abschaltbar. Die LED-Lampe 520 kann nach dem Anschalten dauerhaft bis zum Abschalten leuchten oder sich beispielsweise mittels einer Zeitsteuerung selber wieder ausschalten.

Die LED-Lampe 520 kann auch im Gehäuse 540 angeschaltet werden und beispielsweise mittels einer Klappe (hier nicht gezeigt) Licht nach außen abgeben. Die LED-Lampe 520 kann somit wahlweise intern, also mit Verbleib im Gehäuse 540 oder extern, nach Herausnahme aus dem Gehäuse 540, zum Aushärten des applizierten lichtaushärtenden Materials 120 betrieben werden.

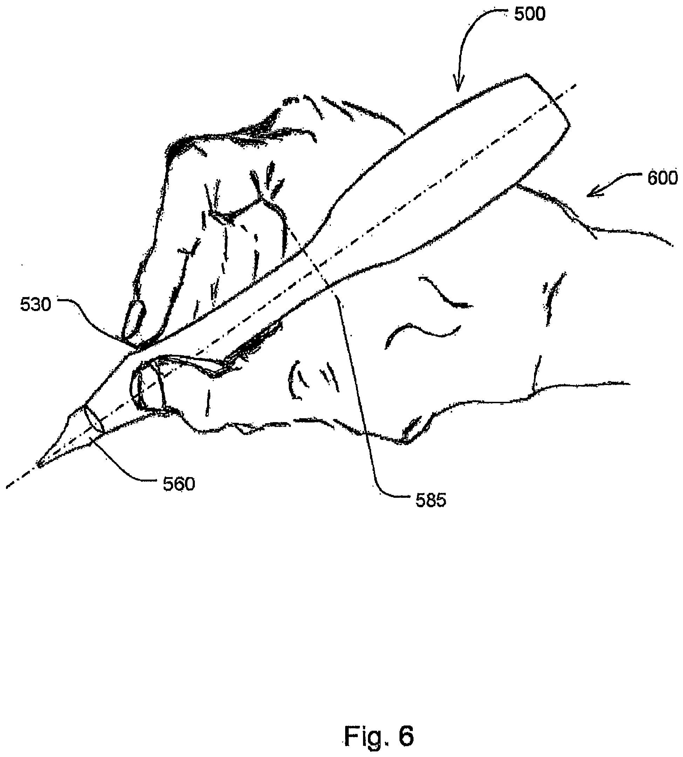

Fig. 6 zeigt die Vorrichtung aus Fig. 5 in einer möglichen Anwendung.

Der Stift 500 wird in der Hand gehalten, Zeigefinger und Daumen der Hand befinden sich an der Fingerauflage 530. Zeigefinger und Daumen können auf das Gehäuse 540, das an dieser Stelle weicher ausgeführt ist, Druck auf das darunterliegende Reservoir 510 ausüben. Durch diese Druckausübung wird das lichtaushärtende Material 120 aus dem Reservoir 510 durch die Düse 560 nach aussen transportiert bzw. appliziert.

Durch Drehung des Stiftes 500 um die Querachse 585 (siehe auch Fig. 5) kann der Stift im umgekehrter Richtung in der Hand 600 gehalten werden. Damit ist dann beispielsweise ein Aushärten des applizierten lichtaushärtenden Materials 120 möglich, wenn die innenliegende LED-Lampe 520 angeschaltet ist und LED-Licht beispielsweise durch eine Öffnung am hinteren Ende des Stiftes 500 austreten kann. Gleichzeitig kann aber vorteilhaft kein zusätzliches lichtaushärtendes Material aus dem Reservoir 510 gegen die Schwerkraft heraustropfen.

### Bezugszeichenliste

| **Bezugszeichen** | **Beschreibung** |
|---|---|
| 100 | Schutzecke |
| 105 | Blitzvorrichtung |
| 110 | Retention |
| 120 | lichtaushärtendes Material |
| 200 | Struktur; Haushaltsmöbel |
| 300 | Haken |
| 310 | Hakenabschnitt |
| 320 | Retentionsraum |
| 330 | Basis-Retentionsplatte |
| 340 | Perforationen |
| 400 | Lampen-Lupenkombination |
| 410 | Fuß |
| 420 | flexibler Bereich |
| 430 | Lupe |
| 440 | erste Lampe |
| 450 | zweite Lampe |
| 500 | Stift |
| 510 | Reservoir |
| 515 | Reservoiröffnung |
| 520 | LED-Lampe |
| 530 | Fingerauflage |
| 540 | Gehäuse |
| 550 | Adapter |
| 560 | Düse |
| 565 | Bewegungsrichtung Düse |
| 570 | Verschlusskappe |
| 575 | Bewegungsrichtung Verschlusskappe |
| 580 | Längsachse |
| 585 | Querachse |
| 600 | Hand |

## Patentansprüche

1. Vorrichtung, welche wenigstens ein Reservoir (510) für eine Menge an lichtaushärtendem Material, wenigstens eine lichtemittierende Einrichtung zum Aushärten des lichtaushärtenden Materials, insbesondere eine LED-Lampe (520), und einen Dosiermechanismus zur Ausbringung des lichtaushärtenden Materials aufweist, **dadurch gekennzeichnet, dass** die lichtemittierende Einrichtung aus der Vorrichtung entnommen werden kann, um als eigenständige Einheit als Aushärtelampe verwendet zu werden und/oder dass die Vorrichtung eingerichtet ist zum dosierten Ausbringen des lichtaushärtenden Materials (120) aus dem Reservoir (510) mittels Betätigen eines handgesteuerten Dosiermechanismus und zum Aushärten des lichtaushärtenden Materials nach dessen Ausbringen mittels Drehen oder Wenden der Vorrichtung, insbesondere um eine Querachse der Vorrichtung, und anschließendem Aktivieren der lichtemittierenden Einrichtung, insbesondere der LED-Lampe (520).

2. Vorrichtung nach Anspruch 1, welche ein zumindest in Abschnitten hiervon verformbares Gehäuse (540) und/oder ein verformbares Reservoir (510) als Dosiermechanismus zur Ausbringung des lichtaushärtenden Materials aufweist.

3. Vorrichtung nach einem der vorhergehenden Ansprüche, bei welcher das wenigstens eine Reservoir (510) und die lichtemittierende Einrichtung, insbesondere die LED-Lampe (520), an zwei gegenüberliegenden Endbereichen der Vorrichtung ausgestaltet oder vorgesehen sind.

4. Vorrichtung nach einem der vorhergehenden Ansprüche, welche einen Abschnitt aufweist, welcher geeignet und/oder vorgesehen und/oder vorbereitet ist zum, insbesondere lösbaren, Verbinden der Vorrichtung mit einem Aufsatz zum Dosieren des lichtaushärtenden Materials bei seiner Entnahme und/oder zum Befüllen des Reservoirs (510) mit lichtaushärtendem Material.

5. Verfahren zum Ausbringen und/oder zum Aushärten von lichtaushärtendem Material mit dem Schritt:
Verwenden einer Vorrichtung gemäß einem der vorhergehenden Ansprüche.

6. Verfahren nach Anspruch 5, mit dem Schritt des dosierten Ausbringens des lichtaushärtenden Materials (120) aus dem Reservoir (510) mittels Betätigen eines handgesteuerten Dosiermechanismus.

7. Verfahren nach einem der Ansprüche 5 oder 6, mit dem Schritt des Aushärtens des lichtaushärtenden Materials nach dessen Ausbringen mittels Drehen oder Wenden der Vorrichtung, insbesondere um eine Querachse der Vorrichtung, und anschließendem Aktivieren der lichtemittierenden Einrichtung, insbesondere der LED-Lampe (520).

8. Set, welches wenigstens eine Vorrichtung gemäß einem der Ansprüche 1 bis 4 und eine Menge an lichtaushärtendem Material aufweist.

9. Set nach Anspruch 8, wobei das Set ferner eine Verschlusskappe (570) für die Vorrichtung und/oder einen oder mehrere Aufsätze zum Dosieren des lichtaushärtenden Materials für die Vorrichtung aufweist.

## Claims

1. Device comprising at least one reservoir (510) for a quantity of light-curing material, at least one light-emitting device for curing the light-curing material, in particular an LED lamp (520), and a metering mechanism for dispensing the light-curing material, **characterized in that** the light-emitting device can be removed from the device in order to be used as a stand-alone device as a curing lamp, and/or that the device is designed for the metered dispensing of the light-curing material (120) from the reservoir (150) by means of actuating a manually controlled metering mechanism and for curing the light-curing material after its dispensing by means of rotating or turning the device, in particular about a transverse axis of the device, and then activating the light-emitting device, in particular the LED lamp (520).

2. Device according to claim 1, which has a housing (540) that is deformable at least in sections thereof and/or a deformable reservoir (510) as a metering mechanism for dispensing the light-curing material.

3. Device according to one of the preceding claims, in which the at least one reservoir (510) and the light-emitting device, in particular the LED lamp (520), are configured or provided at two opposite end regions of the device.

4. Device according to one of the preceding claims, which has a section that is suitable and/or provided and/or prepared for, in particular detachably, connecting the device, to an attachment for metering the light-curing material during ist removal and/or for filling the reservoir (510) with light-curing material.

5. Method for dispensing and/or curing light-curing material, comprising the step:
Using a device according to one of the preceding claims.

6. Method according to claim 5, comprising the step of metered dispensing the light-curing material (120) from the reservoir (510) by actuating a manually controlled metering mechanism.

7. Method according to one of claims 5 or 6, comprising the step of curing the light-curing material after its application by rotating or turning the device, in particular about a transverse axis of the device, and subsequently activating the light-emitting device, in particular the LED lamp (520).

8. Set comprising at least one device according to one of claims 1 to 4 and an amount of light-curing material.

9. Set according to claim 8, wherein the set further comprises a closure cap (570) for the device and/or one or more attachments for dispensing the light-curing material for the device.

## Revendications

1. Dispositif comprenant au moins un réservoir (510) pour une quantité de matériau photopolymérisable, au moins un dispositif émetteur de lumière pour polymériser le matériau photopolymérisable, en particulier une lampe LED (520), et un mécanisme de dosage pour distribuer le matériau photopolymérisable, **caractérisé en ce que** l'unité émettrice de lumière peut être retirée du dispositif afin d'être utilisée comme unité autonome en tant que lampe de polymérisation, et/ou **en ce que** le dispositif est conçu pour distribuer de manière dosée le matériau photopolymérisable (120) à partir du réservoir (150) au moyen d'un mécanisme de dosage actionné manuellement et pour polymériser le matériau photopolymérisable après sa distribution au moyen d'une rotation ou d'un pivotement du dispositif, en particulier autour d'un axe transversal du dispositif, puis en activant le dispositif émetteur de lumière, en particulier la lampe LED (520).

2. Dispositif selon la revendication 1, qui comporte un boîtier (540) déformable au moins par sections et/ou un réservoir déformable (510) servant de mécanisme de dosage pour distribuer le matériau photopolymérisable.

3. Dispositif selon l'une des revendications précédentes, dans lequel le ou les réservoirs (510) et le dispositif émetteur de lumière , en particulier la lampe LED (520), sont conçus ou prévus au niveau de deux zones d'extrémité opposées du dispositif.

4. Dispositif selon l'une des revendications précédentes, qui présente une partie qui est adaptée et/ou prévue et/ou préparée pour relier, en particulier de manière amovible, le dispositif à un embout destiné à doser le matériau photopolymérisable lors de son prélèvement et/ou à remplir le réservoir (510) avec du matériau photopolymérisable.

5. Procédé d'application et/ou de durcissement d'un matériau photopolymérisable, comprenant l'étape: consistant à utiliser un dispositif selon l'une quelconque des revendications précédentes.

6. Procédé selon la revendication 5, comprenant l'étape consistant à distribuer de manière dosée le matériau photopolymérisable (120) à partir du réservoir (510) en actionnant un mécanisme de dosage commandé manuellement.

7. Procédé selon l'une des revendications 5 ou 6, comprenant l'étape consistant à durcir le matériau photopolymérisable après son application en tournant ou en retournant le dispositif, en particulier autour d'un axe transversal du dispositif, puis en activant le dispositif émetteur de lumière, en particulier la lampe LED (520).

8. Ensemble comprenant au moins un dispositif selon l'une des revendications 1 à 4 et une quantité de matériau photopolymérisable.

9. Ensemble selon la revendication 8, dans lequel l'ensemble comprend en outre un capuchon de fermeture (570) pour le dispositif et/ou un ou plusieurs embouts pour doser le matériau photopolymérisable pour le dispositif.
